# EUROPÄISCHE PATENTANMELDUNG

(11) **EP 3 315 237 A1**
(43) Veröffentlichungstag der Anmeldung: **02.05.2018**
(21) Anmeldenummer: 16195790.7
(22) Anmeldetag: 26.10.2016
(51) Int. Cl.: B23K 9/00, B23K 9/02, B23K 9/167, B23K 31/12, B23K 101/00

(54) **VERFAHREN UND SYSTEM ZUM ÜBERWACHEN EINER HERSTELLUNG EINER MEHRLAGIGEN SCHWEISSNAHT SOWIE ENGSPALTSCHWEISSVERFAHREN**

(71) Anmelder: Siemens Aktiengesellschaft, 80333 München (DE)
(72) Erfinder: Borgmann, Christian, 46284 Dorsten (DE); Kern, Torsten-Ulf, 46485 Wesel (DE); Niepold, Karsten, 45481 Mülheim (DE)

(57) **Zusammenfassung**

Die Erfindung betrifft ein Verfahren zum Überwachen einer Herstellung einer mehrlagigen Schweißnaht unter Verwendung eines Engspaltschweißverfahrens, aufweisend die Schritte: optisches Erfassen von wenigstens einem Zustandsparameter einer Anbindung von wenigstens einer Schweißnahtlage (5) der Schweißnaht an wenigstens einen Grundwerkstoffkörper (3, 4), Vergleichen des erfassten Zustandsparameters mit wenigstens einem vorgegebenen Soll-Zustandsparameter; und Ermitteln einer Qualität der Anbindung unter Berücksichtigung eines Ergebnisses des Parametervergleichs.

## Beschreibung

Die Erfindung betrifft ein Verfahren zum Überwachen einer Herstellung einer mehrlagigen Schweißnaht unter Verwendung eines Engspaltschweißverfahrens.

Des Weiteren betrifft die Erfindung ein Engspaltschweißverfahren zum Herstellen einer mehrlagigen Schweißnaht.

Ferner betrifft die Erfindung ein System zum Überwachen einer Herstellung einer mehrlagigen Schweißnaht unter Verwendung eines Engspaltschweißverfahrens, aufweisend wenigstens eine optische Erfassungseinrichtung zum optischen Erfassen von wenigstens einem Zustandsparameter einer Anbindung von wenigstens einer Schweißnahtlage der Schweißnaht an einen Grundwerkstoffkörper.

Verbindungsschweißungen, beispielsweise von Turbinenmodulen werden üblicherweise mit einem mechanisierten Schweißprozess, dem sogenannten WIG(Wolfram-Inert-Gas)-Engspaltschweißprozess, hergestellt. Charakteristisch für diesen Schweißprozess ist die sogenannte Einraupentechnik, das heißt, pro Schweißnahtlage wird nur eine Schweißraupe in den Engspalt zwischen den zu verbindenden Grundwerkstoffkörpern eingebracht. Dadurch ergeben sich ein homogener Lagenaufbau und, durch den Anlasseffekt von aufeinanderfolgenden Schweißnahtlagen, bestmögliche Materialeigenschaften für die Schweißnaht und Wärmeeinflusszonen in den Grundwerkstoffen. Die Schweißparameter, wie Strom, Spannung, Drahtvorschub etc., sind dabei für das Erreichen eines guten Schweißergebnisses optimiert. Insbesondere die Anbindung zwischen Schweißnahtflanke und Grundwerkstoffkörper (Flankeneinbrand) ist essentiell für eine qualitativ hochwertige Schweißnaht. Eine fehlende Anbindung der Schweißnahtflanke an den jeweiligen Grundwerkstoffkörper führt zu sogenannten Flankenbindefehlern.

Üblicherweise wird der Schweißprozess durch verschiedenste Qualitätssicherungsmaßnahmen unterstützt. Während des Schweißens kann beispielsweise eine online-Kontrolle der Schweißparameter und deren Aufzeichnung erfolgen. Liegen die Schweißparameter während des Schweißprozesses außerhalb vorgegebener Grenzwerte, wird der Schweißprozess automatisch gestoppt.

Des Weiteren kann während des Schweißprozesses eine visuelle Kontrolle des Lichtbogens beispielsweise mittels einer Ultra-HDR(High Dynamic Range)-Videokamera erfolgen. Durch diese Kameraüberwachung kann das Schweißpersonal die Flankenanbindung zwischen den Schweißnahtlagen einerseits und den miteinander zu verschweißenden Grundwerkstoffkörpern andererseits visuell überwachen. Dieser Überwachungsschritt ist jedoch rein visuell und nicht automatisiert. Das heißt, eine fehlende Flankenanbindung, die sich in der Videoaufzeichnug zeigt, bedarf einer augenblicklichen Beurteilung durch das Schweißpersonal und gegebenenfalls eines manuellen Stoppens des Schweißprozesses durch das Schweißpersonal.

Nach dem Schweißen kann herkömmlich eine Prüfung der hergestellten Schweißnaht auf Flankenbindefehler zerstörungsfrei, beispielsweise mittels Ultraschall, erfolgen.

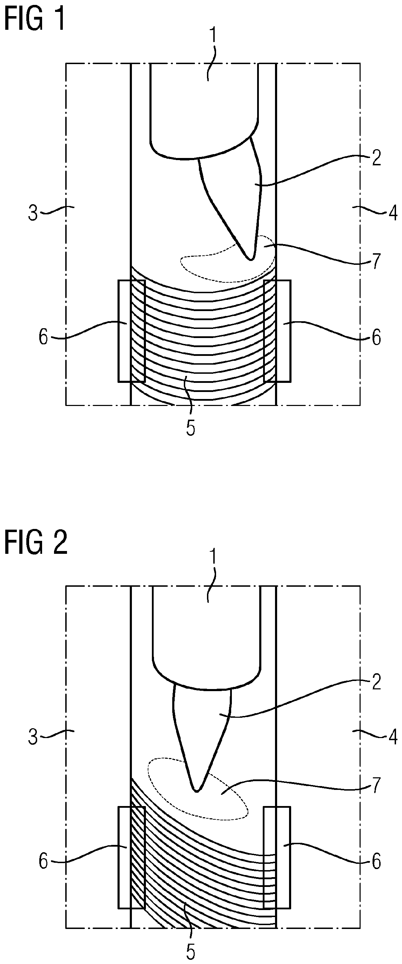

Figur 1 zeigt ein Videobild einer Videokamera, wie es dem Schweißpersonal während eines WIG-Engspaltschweißprozesses herkömmlich zur Verfügung steht. Es ist der verwendete Schweißbrenner 1 mit einer Wolfram-Elektrode 2 zu sehen. Zudem sind zwei Grundwerkstoffkörper 3 und 4 zu sehen, die über eine mehrlagige Schweißnaht miteinander verbunden werden sollen. Zwischen den Grundwerkstoffkörpern 3 und 4 sind mehrere Schweißnahtlagen 5 angeordnet, die jeweils durch eine separat eingebrachte Schweißraupe ausgebildet worden sind und aus denen die Schweißnaht sukzessive aufgebaut wird. Jeder seitliche Endabschnitt der jeweiligen Schweißnahtlage 5 sollte eine gute Anbindung an den jeweiligen Grundwerkstoffkörper 3 bzw. 4 haben. Diese Flankenanbindungen sind in den mit den Rechtecken 6 gekennzeichneten Bereichen vorhanden. Ferner ist ein Lichtbogen 7 zu sehen, der in einem Schutzstrom aus einem inerten Gas zwischen der Wolfram-Elektrode 2 und der obersten Schweißnahtlage 5 brennt. Ein nicht zu sehender Schweißzusatzwerkstoff wird in dem Videobild auf nicht erkennbare Weise von hinten zugeführt und vom Lichtbogen 7 aufgeschmolzen.

Das wichtigste optische Kriterium für eine optimale Flankenanbindung der Schweißnahtlagen 5 ist die Ausbildung einer sogenannten Hohlkehle an einer Schweißoberfläche des jeweiligen Grundwerkstoffkörpers 3 bzw. 4. Eine gut ausgebildete Hohlkehle zeigt sich jeweils in den mit den Rechtecken 6 gekennzeichneten Bereichen als Folge einer guten beidseitigen Anspülung der Grundwerkstoffkörper 3 und 4 mit dem aufgeschmolzenen Schweißraupenwerkstoff. Diese Anspülung wird vom Schweißpersonal visuell erfasst und beurteilt. Abhängig von dieser Beurteilung wird der Schweißprozess fortgesetzt oder für Korrekturmaßnahmen unterbrochen.

Ein Beispiel für eine bewusst schlecht ausgebildete Hohlkehle an dem Grundwerkstoffkörper 4 zeigt Figur 2. Im Vergleich zur guten Anspülung des Schweißraupenwerkstoffs an den Grundwerkstoffkörper 3 ist in dem in Figur 2 rechts gezeigten Rechteck 6 die schlechtere Anbindung der Schweißnahtlagen 5 an den Grundwerkstoffkörper 4 zu erkennen.

Eine Aufgabe der Erfindung ist es, die Herstellung einer Schweißnaht unter Verwendung eines Engspaltschweißverfahrens zu verbessern.

Diese Aufgabe wird durch die unabhängigen Patentansprüche gelöst. Vorteilhafte Ausgestaltungen sind in der nachfolgenden Beschreibung, den abhängigen Patentansprüchen und den Figuren wiedergegeben, wobei diese Ausgestaltungen jeweils für sich genommen oder in verschiedener Kombination miteinander einen weiterbildenden, insbesondere auch bevorzugten oder vorteilhaften, Aspekt der Erfindung darstellen können.

Ein erfindungsgemäßes Verfahren zum Überwachen einer Herstellung einer mehrlagigen Schweißnaht unter Verwendung eines Engspaltschweißverfahrens umfasst die Schritte:
- optisches Erfassen von wenigstens einem Zustandsparameter einer Anbindung von wenigstens einer Schweißnahtlage der Schweißnaht an wenigstens einen Grundwerkstoffkörper;
- Vergleichen des erfassten Zustandsparameters mit wenigstens einem vorgegebenen Soll-Zustandsparameter; und
- Ermitteln einer Qualität der Anbindung unter Berücksichtigung eines Ergebnisses des Parametervergleichs.

Erfindungsgemäß wird die Herstellung der mehrlagigen Schweißnaht unter Verwendung des Engspaltschweißverfahrens, insbesondere WIG-Engspaltschweißverfahrens, überwacht, was bedeutet, dass eine Beurteilung der Qualität der entstehenden Schweißnaht schon während deren Erzeugung erfolgt. Dies kann eine herkömmliche nachträgliche und zerstörungsfreie Prüfung der hergestellten Schweißnaht auf Flankenbindefehler überflüssig machen, was sich vorteilhaft auf den Herstellungsaufwand und damit verbundene Kosten auswirkt.

Gemäß der Erfindung erfolgt die Überwachung der Herstellung der mehrlagigen Schweißnaht unter Verwendung des Engspaltschweißverfahrens automatisiert anhand eines Vergleichs des wenigstens einen optisch erfassten Zustandsparameters der Anbindung von wenigstens einer Schweißnahtlage der Schweißnaht an wenigstens einen Grundwerkstoffkörper mit wenigstens einem vorgegebenen Soll-Zustandsparameter. Ein solcher Vergleich und die darauf aufbauende Ermittlung der Qualität der jeweiligen Anbindung der Schweißnahtlage an den jeweiligen Grundwerkstoffkörper ist während der Herstellung der Schweißnaht bzw. online nicht durch ein Schweißpersonal realisierbar, sondern erfordert eine technische Realisierung und eine Datenverarbeitung, was die genannte Automatisierung zwangsläufig mit sich bringt. Die Ermittlung der Qualität der jeweiligen Anbindung der jeweiligen Schweißnahtlage an den jeweiligen Grundwerkstoffkörper hängt somit nicht mehr von den subjektiven visuellen Fähigkeiten und Erfahrungen des Schweißpersonals ab. Die Erfindung erfordert also den Einsatz eines technischen Systems, mit dem die visuelle bzw. optische Kontrolle der Flankenanbindung der wenigstens einen Schweißnahtlage an den wenigstens einen Grundwerkstoffkörper automatisiert wird.

Das optische Erfassen des wenigstens einen Zustandsparameters der Anbindung der wenigstens einen Schweißnahtlage der Schweißnaht an den wenigstens einen Grundwerkstoffkörper kann mittels einer optischen Erfassungseinrichtung, insbesondere einer Videokamera, beispielsweise einer HDR-Videokamera, oder dergleichen erfolgen.

Das Vergleichen des erfassten Zustandsparameters mit dem wenigstens einen vorgegebenen Soll-Zustandsparameter und das Ermitteln der Qualität der Anbindung der wenigstens einen Schweißnahtlage an den jeweiligen Grundwerkstoffkörper unter Berücksichtigung des Ergebnisses des Vergleichs kann mittels einer mit der optischen Erfassungseinrichtung verbundenen Datenverarbeitungseinrichtung erfolgen, in welcher der wenigstens eine Soll-Zustandsparameter gespeichert ist.

Die Datenverarbeitungseinrichtung kann eine Bildverarbeitungssoftware ausführen und beispielsweise eingerichtet sein, Muster aus erfassten Videobildern zu extrahieren und diese Muster als quantifizierbare Kriterien zur Qualitätskontrolle des Schweißprozesses zu nutzen. Beispielsweise kann die Datenverarbeitungseinrichtung eingerichtet sein, im Rahmen einer Mustererfassung die Formgebung einer Hohlkehle an dem wenigstens einen Grundwerkstoffkörper zu erfassen und diese erfasste Formgebung mit einer vorgegebenen Soll-Formgebung zu vergleichen. Durch den Vergleich zwischen der erfassten Formgebung und der Soll-Formgebung der Hohlkehle kann die Datenverarbeitungseinrichtung ermitteln, ob die Hohlkehle schlecht oder gut ausgebildet ist. Durch diese Automatisierung der Schweißprozessüberwachung ist ein Übersehen einer ungenügend ausgebildeten Hohlkehle durch eine eventuelle Unaufmerksamkeit des Schweißpersonals ausgeschlossen. Durch die Implementierung einer Bilderkennungssoftware können Fehlbeurteilungen der Qualität der jeweiligen Anbindung und somit der Schweißnaht insgesamt über eine redundante Mustererkennung und ein Zusammenschalten verschiedener Bewertungsansätze vermieden werden.

Die Datenverarbeitungseinrichtung kann zusätzlich eingerichtet sein, beispielsweise eine Fehlanbindung der wenigstens einen Schweißnahtlage an den wenigstens einen Grundwerkstoffkörper und/oder eine ungenügende Ausbildung einer Hohlkehle an einem Grundwerkstoffkörper zu signalisieren. Diese Signalisierung kann dem Schweißpersonal optisch und/oder akustisch wahrnehmbar gemacht werden, um dem Schweißpersonal anzuzeigen, dass der Schweißvorgang abgebrochen und korrigiert werden muss. Alternativ oder additiv kann die Signalisierung dazu genutzt werden, den Schweißprozess unabhängig von der Einschätzung des Schweißpersonals automatisch zu stoppen.

Mit dem erfindungsgemäßen Verfahren sind somit reproduzierbare Qualitätskriterien für eine Prozessautomatisierung bereitstellbar. Hierdurch ist eine Prozessoptimierung und eine Vermeidung subjektiver Einflussfaktoren und somit eine verbesserte Qualität der Verschweißung möglich. Zudem können herkömmliche Qualitätssicherungsmaßnahmen nach dem Schweißen entfallen, was eine Kostensenkung bei hoher Qualitätslage bzw. Schweißparameteroptimierung hinsichtlich der Engspaltfüllrate möglich macht. Ferner wird mit der erfindungsgemäßen Automatisierung der Überwachung des Schweißprozesses das Schweißpersonal entlastet, das bisher das Videobild über den gesamten Schweißprozess von mehreren Stunden visuell überwachen muss, und die Personalpausenzeiten können optimiert werden.

Bevorzugt wird als Zustandsparameter ein Winkel zwischen einem an den Grundwerkstoffkörper angrenzenden Endabschnitt der Schweißnahtlage und einem Normalenvektor einer Schweißoberfläche des Grundwerkstoffkörpers erfasst. Dieser Winkel wird auch als Anspülwinkel bezeichnet. Der Anspülwinkel wird zwisehen dem Normalenvektor, der insbesondere identisch zu einer Horizontalen sein kann, und einer an den Endabschnitt im Bereich der Hohlkehle angelegten Tangente gebildet. Die Güte der Anspülung an den Grundwerkstoff kann somit über den Anspülwinkel beurteilt werden. So muss der Winkel beispielweise, unter Berücksichtigung der jeweiligen Kamerawinkeleinstellung, einen vorgegebenen Minimalwinkel überschreiten, ab dem die Hohlkehle als ausreichend ausgebildet bewertet bzw. die Qualität der Anbindung des Endabschnitts an den Grundwerkstoffkörper als ausreichend beurteilt wird. Wird der Mindestwinkel unterschritten, ist die Hohlkehle ungenügend ausgebildet. Eine Bilderkennungssoftware mit Mustererkennung erlaubt es, den Anspülwinkel online aus dem jeweiligen Videobild zu bestimmen und die Bewertung automatisiert, das heißt unabhängig vom Schweißpersonal durchzuführen. Gegebenenfalls können Korrekturmaßnahmen an den Schweißparametern automatisiert durchgeführt werden.

Alternativ oder additiv wird als Zustandsparameter bevorzugt ein Winkel zwischen einem an den Grundwerkstoffkörper angrenzenden Endabschnitt der Schweißnahtlage und der Schweißoberfläche des Grundwerkstoffkörpers erfasst. Dies ist eine Abwandlung der zuletzt genannten Ausgestaltung. Falls der Winkel einen Maximalwinkel überschreitet, wird die Hohlkehle bzw. Anspülung als ungenügend betrachtet. Ist der Winkel kleiner als der oder gleich dem Maximalwinkel, wird die Hohlkehle als ausreichend ausgebildet betrachtet bzw. die Qualität der Anbindung des Endabschnitts an den Grundwerkstoffkörper als ausreichend beurteilt.

Alternativ oder additiv wird als Zustandsparameter bevorzugt eine Grauwertverteilung der Schweißnaht erfasst. Die Grauwertverteilung wird durch die Schweißnaht definiert und ist in dem jeweiligen Videobild enthalten bzw. kann aus diesem extrahiert werden. Durch eine ungenügende Ausbildung einer Hohlkehle an einem Grundwerkstoffkörper bzw. eine ungenügende Anspülung des Schweißnahtwerkstoffs an diesen Grundwerkstoffkörper kann es zur Entstehung von Flankenbindefehlern in Form von Löchern zwischen der Schweißnahtflanke der Schweißnaht und dem Grundwerkstoffkörper kommen. Ein solches Loch kann in einem Videobild als dunkler Bereich deutlich erkannt und mittels einer Bildverarbeitungssoftware erfasst werden. Durch eine fortlaufende Bestimmung der Grauwertverteilung in den erfassten Videobildern ist es insbesondere möglich, ein Loch durch eine Verschiebung hin zu dunklen Grauwerten automatisch zu detektieren.

Alternativ oder additiv wird als Zustandsparameter bevorzugt eine Wärmeverteilung der Schweißnaht erfasst. Gut angebunden Bereiche einer Schweißnahtlage haben direkt nach dem Schweißen eine höhere Temperatur als schlecht angebundene Bereiche. Dies kann beispielsweise mittels einer Infrarotkamera oder mittels einer im infraroten Spektralbereich empfindlichen Kamera mit einem entsprechenden optischen Filter detektiert werden. Eine fehlerhafte Flankenanbindung kann in dem mit der Kamera aufgenommenen Videobild mittels einer Bildverarbeitungssoftware, beispielsweise als dunklerer Bereich bzw. "kalt", erkannt werden. Die Bildverarbeitungssoftware kann Teil eines angelernten und trainierten Bewertungssystems sein, beispielsweise in Form eines neuronalen Netzes.

Ein erfindungsgemäßes Engspaltschweißverfahren zur Herstellung einer mehrlagigen Schweißnaht umfasst die Schritte:
- Überwachen einer Herstellung der Schweißnaht unter Verwendung des Verfahrens gemäß einer der vorgenannten Ausgestaltungen oder einer beliebigen Kombination von wenigstens zwei dieser Ausgestaltungen miteinander; und
- Erzeugen und Ausgeben eines Signals, wenn die Qualität der Anbindung wenigstens ein vorgegebenes Qualitätskriterium nicht erfüllt.

Mit diesem Verfahren sind die oben mit Bezug auf das Überwachungsverfahren genannten Vorteile entsprechend verbunden. Hierbei wird das Überwachungsverfahren verwendet, um auf Basis der damit ermittelten Anbindungsqualität der Schweißnaht zu entscheiden, ob das Signal erzeugt und ausgegeben werden soll oder nicht. Das Signal kann einem Schweißpersonal akustisch und/oder optisch wahrnehmbar gemacht werden. Alternativ oder additiv kann das Signal zum automatischen Abschalten des jeweilig verwendeten Schweißsystems verwendet werden. Das Qualitätskriterium wird vorgegeben und ist durch den wenigstens einen vorgegebenen Soll-Zustandsparameter charakterisiert, mit dem der wenigstens eine erfasste Zustandsparameter der Anbindung der wenigstens einen Schweißnahtlage der Schweißnaht an den wenigstens einen Grundwerkstoffkörper zur Überwachung der Anbindungsqualität verglichen wird.

Das Signal kann beispielsweise ein Stoppsignal und/oder ein Informationssignal sein, das eine Ortskoordinate des fehlerhaften Anbindungsbereichs enthält. Alternativ oder additiv kann das Signal dazu dienen, anzuzeigen, dass beispielsweise eine Reparatur vor oder bei dem Aufbringen der nächsten Schweißnahtlage erfolgen sollte. Alternativ oder additiv kann das Signal eine Drehkoordinate zu dem fehlerhaften Anbindungsbereich enthalten.

Bevorzugt wird das Signal erzeugt und ausgegeben, wenn der erfasste Winkel zwischen dem an den Grundwerkstoffkörper angrenzenden Endabschnitt der Schweißnahtlage und dem Normalenvektor der Schweißoberfläche des Grundwerkstoffkörpers kleiner als ein vorgegebener Minimalwinkel ist. Hierzu wird zunächst als Zustandsparameter der Winkel zwischen dem Endabschnitt der Schweißnahtlage und dem Normalenvektor der angrenzend zu diesem Endabschnitt angeordneten Schweißoberfläche des Grundwerkstoffkörpers unter Berücksichtigung der jeweiligen Kamerawinkeleinstellung erfasst. Ist der erfasste Winkel also kleiner als der vorgegebene Minimalwinkel, wird darauf geschlossen, dass die Flankenanbindung der Schweißnahtlage zu dem jeweiligen Grundwerkstoffkörper unzureichend ist, so dass das Signal zu erzeugen und auszugeben ist.

Alternativ oder additiv wird das Signal bevorzugt erzeugt und ausgegeben, wenn der erfasste Winkel zwischen dem an den Grundwerkstoffkörper angrenzenden Endabschnitt der Schweißnahtlage und der Schweißoberfläche des Grundwerkstoffkörpers größer als ein vorgegebener Maximalwinkel ist. Hierzu wird zunächst als Zustandsparameter der Winkel zwischen dem Endabschnitt der Schweißnahtlage und der Schweißoberfläche des Grundwerkstoffkörpers unter Berücksichtigung der jeweiligen Kamerawinkeleinstellung erfasst. Ist der erfasste Winkel also größer als der vorgegebene Maximalwinkel, wird darauf geschlossen, dass die Flankenanbindung der Schweißnahtlage zu dem Grundwerkstoffkörper unzureichend ist, so dass das Signal zu erzeugen und auszugeben ist.

Alternativ oder additiv wird das Signal bevorzugt erzeugt und ausgegeben, wenn in der erfassten Grauwertverteilung der Schweißnaht wenigstens ein Bereich vorhanden ist, dessen Helligkeit geringer als ein vorgegebener Helligkeitsgrenzwert ist. Hierzu wird zunächst als Zustandsparameter die Grauwertverteilung der Schweißnaht erfasst. Ist die Helligkeit des wenigstens einen Bereichs der erfassten Grauwertverteilung also geringer als der vorgegebene Helligkeitsgrenzwert, wird darauf geschlossen, dass die Flankenanbindung der Schweißnahtlage zu dem Grundwerkstoffkörper unzureichend ist, so dass das Signal zu erzeugen und auszugeben ist.

Alternativ oder additiv wird das Signal bevorzugt erzeugt und ausgegeben, wenn in der erfassten Wärmeverteilung wenigstens ein Bereich vorhanden ist, dessen Temperatur niedriger als ein vorgegebener Temperaturgrenzwert ist. Hierzu wird zunächst als Zustandsparameter die Wärmeverteilung der Schweißnaht erfasst. Ist die Temperatur des wenigstens einen Bereichs der erfassten Wärmeverteilung also niedriger als der vorgegebene Temperaturgrenzwert, wird darauf geschlossen, dass die Flankenanbindung der Schweißnahtlage zu dem Grundwerkstoffkörper unzureichend ist, so dass das Signal zu erzeugen und auszugeben ist.

Ein erfindungsgemäßes System zum Überwachen einer Herstellung einer mehrlagigen Schweißnaht unter Verwendung eines Engspaltschweißverfahrens umfasst wenigstens eine optische Erfassungseinrichtung zum optischen Erfassen von wenigstens einem Zustandsparameter einer Anbindung von wenigstens einer Schweißnahtlage der Schweißnaht an einen Grundwerkstoffkörper und wenigstens eine mit der Erfassungseinrichtung verbundene Datenverarbeitungseinrichtung, die eingerichtet ist, eine Qualität der Anbindung unter Berücksichtigung des erfassten Zustandsparameters zu ermitteln und ein Signal zu erzeugen und auszugeben, wenn die Qualität der Anbindung wenigstens ein vorgegebenes Qualitätskriterium nicht erfüllt.

Mit dem System sind die oben mit Bezug auf die Verfahren genannten Vorteile entsprechend verbunden. Insbesondere kann das System zum Durchführen der Verfahren eingesetzt werden.

Die optische Erfassungseinrichtung kann eine Videokamera, insbesondere eine HDR-Videokamera, eine Infrarotkamera, eine im infraroten Spektralbereich empfindliche Kamera mit einem optischen Filter oder dergleichen sein. Das System kann auch zwei oder mehrere entsprechende optische Erfassungseinrichtungen aufweisen.

Die Datenverarbeitungseinrichtung kann kabelgebunden oder kabellos mit der optischen Erfassungseinrichtung verbunden sein. Die Datenverarbeitungseinrichtung umfasst wenigstens eine Recheneinheit, beispielsweise einen Mikroprozessor, mit der beispielsweise eine Bildverarbeitungssoftware zur Mustererkennung ausführbar ist, und wenigstens eine Speichereinheit, in der wenigstens ein vorgegebener Soll-Zustandsparameter speicherbar ist.

Bevorzugt ist die Erfassungseinrichtung eingerichtet, als Zustandsparameter einen Winkel zwischen einem an den Grundwerkstoffkörper angrenzenden Endabschnitt der Schweißnahtlage und einem Normalenvektor einer Schweißoberfläche des Grundwerkstoffkörpers zu erfassen, und wobei die Datenverarbeitungseinrichtung eingerichtet ist, das Signal zu erzeugen und auszugeben, wenn der erfasste Winkel zwischen dem Endabschnitt der Schweißnahtlage und dem Normalenvektor der Schweißoberfläche des Grundwerkstoffkörpers kleiner als ein vorgegebener Minimalwinkel ist. Mit dieser Ausgestaltung sind die oben mit Bezug auf die entsprechenden Ausgestaltungen der Verfahren genannten Vorteile entsprechend verbunden.

Alternativ oder additiv ist die Erfassungseinrichtung bevorzugt eingerichtet, als Zustandsparameter einen Winkel zwischen einem an den Grundwerkstoffkörper angrenzenden Endabschnitt der Schweißnahtlage und der Schweißoberfläche des Grundwerkstoffkörpers zu erfassen, und wobei die Datenverarbeitungseinrichtung eingerichtet ist, das Signal zu erzeugen und auszugeben, wenn der erfasste Winkel zwischen dem Endabschnitt der Schweißnahtlage und der Schweißoberfläche des Grundwerkstoffkörpers größer als ein vorgegebener Maximalwinkel ist. Mit dieser Ausgestaltung sind die oben mit Bezug auf die entsprechenden Ausgestaltungen der Verfahren genannten Vorteile entsprechend verbunden.

Alternativ oder additiv ist die Erfassungseinrichtung bevorzugt eingerichtet, als Zustandsparameter eine Grauwertverteilung der Schweißnaht zu erfassen, und wobei die Datenverarbeitungseinrichtung eingerichtet ist, das Signal zu erzeugen und auszugeben, wenn in der erfassten Grauwertverteilung der Schweißnaht wenigstens ein Bereich vorhanden ist, dessen Helligkeit geringer als ein vorgegebener Helligkeitsgrenzwert ist. Mit dieser Ausgestaltung sind die oben mit Bezug auf die entsprechenden Ausgestaltungen der Verfahren genannten Vorteile entsprechend verbunden.

Alternativ oder additiv ist die Erfassungseinrichtung bevorzugt eingerichtet, als Zustandsparameter eine Wärmeverteilung der Schweißnaht zu erfassen, und wobei die Datenverarbeitungseinrichtung eingerichtet ist, das Signal zu erzeugen und auszugeben, wenn in der erfassten Wärmeverteilung wenigstens ein Bereich vorhanden ist, dessen Temperatur niedriger als ein vorgegebener Temperaturgrenzwert ist. Mit dieser Ausgestaltung sind die oben mit Bezug auf die entsprechenden Ausgestaltungen der Verfahren genannten Vorteile entsprechend verbunden.

Die optische Erfassungseinrichtung umfasst bevorzugt entweder wenigstens eine Infrarotkamera oder eine für Infrarotstrahlung empfindliche Kamera mit einem optischen Filter.

Im Folgenden wird die Erfindung unter Bezugnahme auf die anliegenden Figuren anhand bevorzugter Ausführungsformen beispielhaft erläutert, wobei die nachfolgend dargestellten Merkmale sowohl jeweils für sich genommen, als auch in unterschiedlicher Kombination miteinander einen weiterbildenden oder vorteilhaften Aspekt der Erfindung darstellen können. Es zeigen:
- Fig. 1: eine Darstellung eines beispielhaften Videobildes mit beidseitig gut ausgebildeten Anbindungen von Schweißnahtlagen an Grundwerkstoffkörper;
- Fig. 2: eine Darstellung eines beispielhaften Videobildes mit einer gut ausgebildeten Anbindung (links) und einer schlecht ausgebildeten Anbindung (rechts) von Schweißnahtlagen an Grundwerkstoffkörper;
- Fig. 3: eine Darstellung eines beispielhaften Videobildes mit beidseitig gut ausgebildeten Anbindungen von Schweißnahtlagen an Grundwerkstoffkörper mit dargestellten Anspülwinkeln;
- Fig. 4: eine Darstellung eines beispielhaften Videobildes mit einer gut ausgebildeten Anbindung (links) und einer schlecht ausgebildeten Anbindung (rechts) von Schweißnahtlagen an Grundwerkstoffkörper mit dargestellten Anspülwinkeln;
- Fig. 5: eine Darstellung eines beispielhaften Videobildes mit beidseitig gut ausgebildeten Anbindungen von Schweißnahtlagen an Grundwerkstoffkörper mit dargestellten alternativen Anspülwinkeln;
- Fig. 6: eine Darstellung eines beispielhaften Videobildes mit einer gut ausgebildeten Anbindung (links) und einer schlecht ausgebildeten Anbindung (rechts) von Schweißnahtlagen an Grundwerkstoffkörper mit dargestellten alternativen Anspülwinkeln; und
- Fig. 7: eine Darstellung eines beispielhaften Videobildes mit einer gut ausgebildeten Anbindung (links) und einer schlecht ausgebildeten Anbindung (rechts) von Schweißnahtlagen an Grundwerkstoffkörper.

Figur 1 zeigt eine Darstellung eines beispielhaften Videobildes mit beidseitig gut ausgebildeten Anbindungen von Schweißnahtlagen 5 an Grundwerkstoffkörper 3 und 4. Es sind die einzelnen Schweißnahtlagen 5 zu sehen, die mittels des Schweißbrenners 1, der Wolfram-Elektrode 2, des Lichtbogens 7, des nicht gezeigten Schweißzusatzstoffs und jeweils unter Einbringung einer nicht gezeigten separaten Schweißraupe in den dargestellten Engspalt zwischen den Grundwerkstoffkörpern 3 und 4 ausgebildet werden. An den Grundstoffkörpern 3 und 4 werden durch die Anspülung der Grundwerkstoffkörper 3 und 4 mit dem geschmolzenen Werkstoff der einzelnen Schweißnahtlagen 5 jeweils eine Hohlkehle ausgebildet. Die Hohlkehlen sind in den innerhalb der Rechtecke 6 liegenden Bereichen der Grundwerkstoffkörper 3 und 4 ausgebildet.

Figur 2 zeigt eine Darstellung eines beispielhaften Videobildes mit einer gut ausgebildeten Anbindung (links) und einer schlecht ausgebildeten Anbindung (rechts) von Schweißnahtlagen 5 an Grundwerkstoffkörper 3 und 4. Wie klar zu sehen ist, ist in dem rechts dargestellten Rechteck 6 keine Hohlkehle an dem Grundwerkstoffkörper 4 ausgebildet, während in dem links dargestellten Rechteck 6 eine Hohlkehle an dem Grundwerkstoffkörper 3 vorhanden ist. Dies ist ein klares Indiz dafür, dass die Anbindung der Schweißnahtlagen 5 an den Grundwerkstoffkörper 4 ungenügend ist.

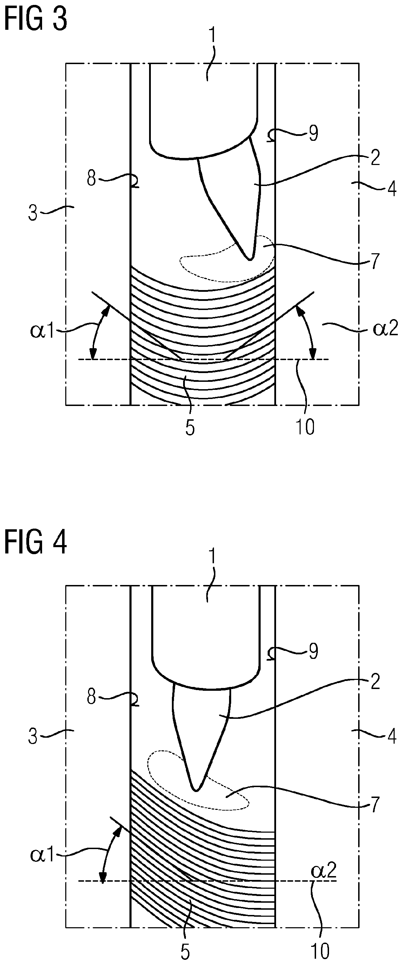

Figur 3 zeigt eine Darstellung eines beispielhaften Videobildes mit beidseitig gut ausgebildeten Anbindungen von Schweißnahtlagen 5 an Grundwerkstoffkörper 3 und 4 mit dargestellten Anspülwinkeln α₁ und α₂. Das Videobild entspricht dem in Figur 1 gezeigten Videobild. Die Größe der Anspülwinkel α₁ und α₂ hängt von der jeweiligen Kamerawinkeleinstellung ab, die jedoch bekannt ist und somit einfach berücksichtigt werden kann.

Die Anspülwinkel α₁ und α₂ werden für ein erfindungsgemäßes Verfahren zum Überwachen einer Herstellung einer mehrlagigen Schweißnaht unter Verwendung eines WIG-Engspaltschweißverfahrens verwendet. Hierzu wird zunächst wenigstens ein Zustandsparameter zu jeder seitlichen Anbindung von wenigstens einer Schweißnahtlage 5 an den jeweiligen Grundwerkstoffkörper 3 bzw. 4 erfasst. Insbesondere werden als Zustandsparameter die an den Hohlkehlen gegebenen Anspülwinkel α₁ und α₂ zwischen dem an den jeweiligen Grundwerkstoffkörper 3 bzw. 4 angrenzenden Endabschnitt der jeweiligen Schweißnahtlage 5 und einem Normalenvektor einer angrenzend zu diesem Endabschnitt angeordneten Schweißoberfläche 8 bzw. 9 des jeweiligen Grundwerkstoffkörpers 3 bzw. 4 erfasst. Der Normalenvektor ist hier identisch mit der Horizontalen 10. Eine Bilderkennungssoftware mit Mustererkennung kann verwendet werden, um die Anspülwinkel α₁ und α₂ online aus dem Videobild zu bestimmen. Hierdurch kann die Bewertung der Qualität der Anbindung der jeweiligen Schweißnahtlage 5 an den jeweiligen Grundwerkstoffkörper 3 bzw. 4 automatisiert, das heißt unabhängig vom Schweißpersonal ausgeführt werden.

Die erfassten Anspülwinkel α₁ und α₂ werden zur Ermittlung der Qualität der Anbindung mit wenigstens einem vorgegebenen Soll-Zustandsparameter verglichen. Die Anspülwinkel α₁ und α₂ werden insbesondere mit einem vorgegebenen Minimalwinkel verglichen, der den vorgegebenen Soll-Zustandsparameter darstellt. Die Qualität der Anbindung wird unter Berücksichtigung des Ergebnisses dieses Parametervergleichs ermittelt. Die Güte der Anspülung zu den Grundwerkstoffkörpern 3 und 4 kann somit über die Anspülwinkel α₁ und α₂ beurteilt werden.

Wenn ein Anspülwinkel α₁ bzw. α₂ kleiner als der vorgegebene Minimalwinkel ist, wenn also die entsprechende Anbindung der jeweiligen Schweißnahtlage 5 an den jeweiligen Grundwerkstoffkörper 3 bzw. 4 ein Qualitätskriterium nicht erfüllt, wird ein Signal, beispielsweise ein Stoppsignal oder dergleichen, erzeugt und ausgegeben.

Figur 4 zeigt eine Darstellung eines beispielhaften Videobildes mit einer gut ausgebildeten Anbindung (links) und einer schlecht ausgebildeten Anbindung (rechts) von Schweißnahtlagen 5 an Grundwerkstoffkörper 3 und 4 mit dargestellten Anspülwinkeln α₁ und α₂. Das Videobild entspricht dem in Figur 2 gezeigten Videobild. Die Größe der Anspülwinkel α₁ und α₂ hängt von der jeweiligen Kamerawinkeleinstellung ab, die jedoch bekannt ist und somit einfach berücksichtigt werden kann.

Der Anspülwinkel α₁ ist größer als der oder gleich dem vorgebebenen Minimalwinkel, so dass die in Figur 4 links gezeigte Hohlkehle bzw. die dortige Anbindung der jeweiligen Schweißnahtlage 5 an den Grundwerkstoffkörper 3 für ausreichend bzw. gut befunden wird. Hingegen ist der Anspülwinkel α₂ (=0) kleiner als der vorgegebene Minimalwinkel, woraus geschlossen wird, dass die in Figur 4 rechts gezeigte Hohlkehle bzw. Anbindung der jeweiligen Schweißnahtlage 5 an den Grundwerkstoffkörper 4 ungenügend ausgebildet ist. Folglich erfüllt die in Figur 4 rechts gezeigte Anbindung der jeweiligen Schweißnahtlage 5 an den Grundwerkstoffkörper 4 nicht das Qualitätskriterium, weshalb ein Signal erzeugt und ausgegeben wird.

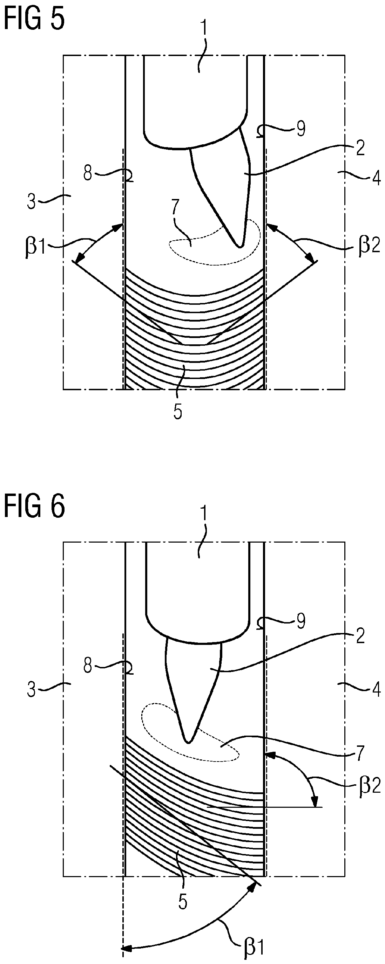

Figur 5 zeigt eine Darstellung eines beispielhaften Videobildes mit beidseitig gut ausgebildeten Anbindungen von Schweißnahtlagen 5 an Grundwerkstoffkörpern 3 und 4 mit dargestellten alternativen Anspülwinkeln β₁ und β₂. Das Videobild entspricht dem in Figur 1 gezeigten Videobild. Die Größe der alternativen Anspülwinkel β₁ und β₂ hängt von der jeweiligen Kamerawinkeleinstellung ab, die jedoch bekannt ist und somit einfach berücksichtigt werden kann.

Im Unterschied zu den Figuren 3 und 4 werden also gemäß Figur 5 als Zustandsparameter der jeweiligen Schweißnahtlage 5 die alternativen Anspülwinkel β₁ und β₂ zwischen einem an den jeweiligen Grundwerkstoffkörper 3 bzw. 4 angrenzenden Endabschnitt der jeweiligen Schweißnahtlage 5 und der jeweiligen Schweißoberfläche 8 bzw. 9 des jeweiligen Grundwerkstoffkörpers 3 bzw. 4 erfasst und mit einem vorgegebenen Soll-Zustandsparameter verglichen, um die Qualität der jeweiligen Anbindung zu ermitteln.

Wenn ein erfasster alternativer Anspülwinkel β₁ bzw. β₂ zwischen dem an den jeweiligen Grundwerkstoffkörper 3 bzw. 4 angrenzenden Endabschnitt der jeweiligen Schweißnahtlage 5 und der jeweiligen Schweißoberfläche 8 bzw. 9 des jeweiligen Grundwerkstoffkörpers 3 bzw. 4 größer als ein vorgegebener Maximalwinkel ist, wird ein Signal erzeugt und ausgegeben, da gefolgert werden würde, dass die jeweilige Hohlkehle bzw. die Anbindung der jeweiligen Schweißnahtlage 5 an den jeweiligen Grundwerkstoffkörper 3 bzw. 4 ungenügend ist.

Figur 6 zeigt eine Darstellung eines beispielhaften Videobildes mit einer gut ausgebildeten Anbindung (links) und einer schlecht ausgebildeten Anbindung (rechts) von Schweißnahtlagen 5 an Grundwerkstoffkörper 3 und 4 mit dargestellten alternativen Anspülwinkeln β₁ und β₂. Das Videobild entspricht dem in Figur 2 gezeigten Videobild. Die Größe der Anspülwinkel β₁ und β₂ hängt von der jeweiligen Kamerawinkeleinstellung ab, die jedoch bekannt ist und somit einfach berücksichtigt werden kann.

Im Unterschied zu Figur 5 ist der Anspülwinkel β₂ (=90°) größer als der vorgegebene Maximalwinkel. Daraus wird geschlossen, dass an der in Figur 6 links gezeigten Hohlkehle eine gute Anbindung der jeweiligen Schweißnahtlage 5 an den Grundwerkstoffkörper 3 gegeben ist, während an der in Figur 6 rechts gezeigten Hohlkehle eine ungenügende Anbindung der jeweiligen Schweißnahtlage 5 an den Grundwerkstoffkörper 4 gegeben ist. Folglich erfüllt die in Figur 6 rechts gezeigte Anbindung der jeweiligen Schweißnahtlage 5 an den Grundwerkstoffkörper 4 nicht das Qualitätskriterium, weshalb ein Signal erzeugt und ausgegeben wird. Eine Kombination der Beurteilungskriterien aus den Figuren 3 und 4 mit den Beurteilungskriterien aus den Figuren 5 und 6 ist zur Schaffung redundanter Beurteilungskriterien ebenfalls möglich.

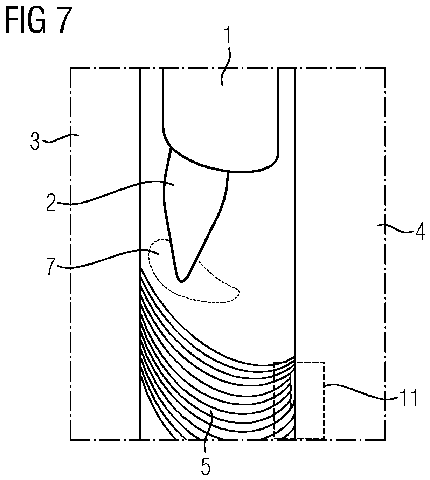

Fig. 7 zeigt eine Darstellung eines beispielhaften Videobildes mit einer gut ausgebildeten Anbindung (links) und einer schlecht ausgebildeten Anbindung (rechts) von Schweißnahtlagen 5 an Grundwerkstoffkörper 3 und 4.

Zur Durchführung eines erfindungsgemäßen Verfahrens zum Überwachen einer Herstellung einer mehrlagigen Schweißnaht unter Verwendung eines WIG-Engspaltschweißverfahrens wird zunächst wenigstens ein Zustandsparameter zu einer Anbindung von wenigstens einer Schweißnahtlage 5 an den jeweiligen Grundwerkstoffkörper 3 bzw. 4 erfasst. Insbesondere werden als Zustandsparameter kontinuierlich die Grauwertverteilungen der Schweißnaht erfasst. Es wird also gemäß Figur 7 zu jedem von der Schweißnaht aufgenommenen Videobild eine Grauwertverteilung ermittelt, die zwangsläufig wenigstens einen Zustandsparameter der jeweiligen Anbindung der jeweiligen Schweißnahtlage 5 an den jeweiligen Grundwerkstoffkörper 3 bzw. 4 enthält.

Mittels einer Bilderkennungssoftware mit Mustererkennung kann die jeweilig erfasste Grauwertverteilung online dahingehend überprüft werden, ob sie wenigstens ein Bereich aufweist, dessen Helligkeit geringer als ein vorgegebener Helligkeitsgrenzwert ist. Hierzu wird die jeweilige Grauwertverteilung insbesondere in dem in Figur 7 gezeigten Rechteck 11 mit dem vorgegebenen Helligkeitsgrenzwert verglichen. Wenn in der jeweilig erfassten Grauwertverteilung der Schweißnaht wenigstens ein Bereich vorhanden ist, dessen Helligkeit geringer als der vorgegebene Helligkeitsgrenzwert ist, wird ein Signal erzeugt und ausgegeben, da in dem dunklen Bereich ein Loch zwischen der jeweiligen Schweißnahtlage 5 und dem jeweiligen Grundwerkstoffkörper 3 bzw. 4 und somit eine ungenügende Anbindung der jeweiligen Schweißnahtlage 5 an den jeweiligen Grundwerkstoffkörper 3 bzw. 4 vorhanden ist.

In Figur 7 ist der fehlerhafte Bereich bzw. das Loch durch das Rechteck 11 markiert. Das Loch ist deutlich als dunkler Bereich in der Grauwertverteilung zu erkennen. Durch eine fortlaufende Bestimmung der Grauwertverteilung in dem fehlerhaften Bereich ist es möglich, ein solches Loch durch eine Verschiebung hin zu dunklen Grauwerten automatisch zu detektieren.

Alternativ oder additiv kann zur Durchführung eines erfindungsgemäßen Verfahrens zum Überwachen einer Herstellung einer mehrlagigen Schweißnaht unter Verwendung eines WIG-Engspaltschweißverfahrens als Zustandsparameter in Zeitabständen oder kontinuierlich eine Wärmeverteilung der Schweißnaht erfasst werden. Es kann also zu jedem von der Schweißnaht aufgenommenen Videobild eine Wärmeverteilung ermittelt werden, die zwangsläufig wenigstens einen Zustandsparameter der jeweiligen Anbindung der jeweiligen Schweißnahtlage 5 an den jeweiligen Grundwerkstoffkörper 3 bzw. 4 enthält.

Mittels einer Bilderkennungssoftware mit Mustererkennung kann die jeweilig erfasste Wärmeverteilung online dahingehend überprüft werden, ob sie wenigstens ein Bereich aufweist, dessen Temperatur niedriger als ein vorgegebener Temperaturgrenzwert ist. Hierzu wird die jeweilige Wärmeverteilung, beispielsweise in dem in Figur 7 gezeigten Rechteck 11, mit dem vorgegebenen Temperaturgrenzwert verglichen. Wenn in der jeweilig erfassten Wärmeverteilung der Schweißnaht wenigstens ein Bereich vorhanden ist, dessen Temperatur niedriger als ein vorgegebener Temperaturgrenzwert ist, wird ein Signal erzeugt und ausgegeben, da in diesem Bereich ein Loch zwischen der jeweiligen Schweißnahtlage 5 und dem jeweiligen Grundwerkstoffkörper 3 bzw. 4 und somit eine ungenügende Anbindung der jeweiligen Schweißnahtlage 5 an den jeweiligen Grundwerkstoffkörper 3 bzw. 4 vorhanden ist.

Zur Durchführung der mit Bezug auf die Figuren 3 bis 7 beschriebenen Verfahren kann ein erfindungsgemäßes System zum Überwachen einer Herstellung einer mehrlagigen Schweißnaht unter Verwendung eines Engspaltschweißverfahrens gemäß einer seiner Ausgestaltungen oder einer beliebigen Kombination von wenigstens zwei dieser Ausgestaltungen miteinander eingesetzt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Überwachen einer Herstellung einer mehrlagigen Schweißnaht unter Verwendung eines Engspaltschweißverfahrens, aufweisend die Schritte:
- optisches Erfassen von wenigstens einem Zustandsparameter einer Anbindung von wenigstens einer Schweißnahtlage (5) der Schweißnaht an wenigstens einen Grundwerkstoffkörper (3, 4);
- Vergleichen des erfassten Zustandsparameters mit wenigstens einem vorgegebenen Soll-Zustandsparameter; und
- Ermitteln einer Qualität der Anbindung unter Berücksichtigung eines Ergebnisses des Parametervergleichs.

2. Verfahren gemäß Anspruch 1,
wobei als Zustandsparameter ein Winkel (α₁, α₂) zwischen einem an den Grundwerkstoffkörper (3, 4) angrenzenden Endabschnitt der Schweißnahtlage (5) und einem Normalenvektor einer Schweißoberfläche (8, 9) des Grundwerkstoffkörpers (3, 4) erfasst wird.

3. Verfahren gemäß Anspruch 1 oder 2,
wobei als Zustandsparameter ein Winkel (β₁, β₂) zwischen einem Endabschnitt der Schweißnahtlage (5) und der Schweißoberfläche (8, 9) des Grundwerkstoffkörpers (3, 4) erfasst wird.

4. Verfahren gemäß einem der Ansprüche 1 bis 3,
wobei als Zustandsparameter eine Grauwertverteilung der Schweißnaht erfasst wird.

5. Verfahren gemäß einem der Ansprüche 1 bis 4,
wobei als Zustandsparameter eine Wärmeverteilung der Schweißnaht erfasst wird.

6. Engspaltschweißverfahren zur Herstellung einer mehrlagigen Schweißnaht, aufweisend die Schritte:
- Überwachen einer Herstellung der Schweißnaht unter Verwendung des Verfahrens gemäß einem der Ansprüche 1 bis 5; und
- Erzeugen und Ausgeben eines Signals, wenn die Qualität der Anbindung wenigstens ein vorgegebenes Qualitätskriterium nicht erfüllt.

7. Verfahren gemäß Anspruch 6,
wobei das Signal erzeugt und ausgegeben wird, wenn der erfasste Winkel (α₁, α₂) zwischen dem Endabschnitt der Schweißnahtlage (5) und dem Normalenvektor der Schweißoberfläche (8, 9) des Grundwerkstoffkörpers (3, 4) kleiner als ein vorgegebener Minimalwinkel ist.

8. Verfahren gemäß Anspruch 6 oder 7,
wobei das Signal erzeugt und ausgegeben wird, wenn der erfasste Winkel (β₁, β₂) zwischen dem Endabschnitt der Schweißnahtlage (5) und der Schweißoberfläche (8, 9) des Grundwerkstoffkörpers (3, 4) größer als ein vorgegebener Maximalwinkel ist.

9. Verfahren gemäß einem der Ansprüche 6 bis 8,
wobei das Signal erzeugt und ausgegeben wird, wenn in der erfassten Grauwertverteilung der Schweißnaht wenigstens ein Bereich vorhanden ist, dessen Helligkeit geringer als ein vorgegebener Helligkeitsgrenzwert ist.

10. Verfahren gemäß einem der Ansprüche 6 bis 9,
wobei das Signal erzeugt und ausgegeben wird, wenn in der erfassten Wärmeverteilung wenigstens ein Bereich vorhanden ist, dessen Temperatur niedriger als ein vorgegebener Temperaturgrenzwert ist.

11. System zum Überwachen einer Herstellung einer mehrlagigen Schweißnaht unter Verwendung eines Engspaltschweißverfahrens, aufweisend wenigstens eine optische Erfassungseinrichtung zum optischen Erfassen von wenigstens einem Zustandsparameter einer Anbindung von wenigstens einer Schweißnahtlage (5) der Schweißnaht an einen Grundwerkstoffkörper (3, 4), **gekennzeichnet durch** wenigstens eine mit der Erfassungseinrichtung verbundene Datenverarbeitungseinrichtung, die eingerichtet ist, eine Qualität der Anbindung unter Berücksichtigung des erfassten Zustandsparameters zu ermitteln und ein Signal zu erzeugen und auszugeben, wenn die Qualität der Anbindung wenigstens ein vorgegebenes Qualitätskriterium nicht erfüllt.

12. System gemäß Anspruch 11,
wobei die Erfassungseinrichtung eingerichtet ist, als Zustandsparameter einen Winkel (α₁, α₂) zwischen einem an den Grundwerkstoffkörper (3, 4) angrenzenden Endabschnitt der Schweißnahtlage (5) und einem Normalenvektor einer Schweißoberfläche (8, 9) des Grundwerkstoffkörpers (3, 4) zu erfassen, und wobei die Datenverarbeitungseinrichtung eingerichtet ist, das Signal zu erzeugen und auszugeben, wenn der erfasste Winkel (α₁, α₂) zwischen dem Endabschnitt der Schweißnahtlage (5) und dem Normalenvektor der Schweißoberfläche (8, 9) des Grundwerkstoffkörpers (3, 4) kleiner als ein vorgegebener Minimalwinkel ist.

13. System gemäß Anspruch 11 oder 12,
wobei die Erfassungseinrichtung eingerichtet ist, als Zustandsparameter einen Winkel (β₁, β₂) zwischen einem an den Grundwerkstoffkörper (3, 4) angrenzenden Endabschnitt der Schweißnahtlage (5) und der Schweißoberfläche (8, 9) des Grundwerkstoffkörpers (3, 4) zu erfassen, und wobei die Datenverarbeitungseinrichtung eingerichtet ist, das Signal zu erzeugen und auszugeben, wenn der erfasste Winkel (β₁, β₂) zwischen dem Endabschnitt der Schweißnahtlage (5) und der Schweißoberfläche (8, 9) des Grundwerkstoffkörpers (3, 4) größer als ein vorgegebener Maximalwinkel ist.

14. System gemäß einem der Ansprüche 11 bis 13,
wobei die Erfassungseinrichtung eingerichtet ist, als Zustandsparameter eine Grauwertverteilung der Schweißnaht zu erfassen, und wobei die Datenverarbeitungseinrichtung eingerichtet ist, das Signal zu erzeugen und auszugeben, wenn in der erfassten Grauwertverteilung der Schweißnaht wenigstens ein Bereich vorhanden ist, dessen Helligkeit geringer als ein vorgegebener Helligkeitsgrenzwert ist.

15. System gemäß einem der Ansprüche 11 bis 14,
wobei die Erfassungseinrichtung eingerichtet ist, als Zustandsparameter eine Wärmeverteilung der Schweißnaht zu erfassen, und wobei die Datenverarbeitungseinrichtung eingerichtet ist, das Signal zu erzeugen und auszugeben, wenn in der erfassten Wärmeverteilung wenigstens ein Bereich vorhanden ist, dessen Temperatur niedriger als ein vorgegebener Temperaturgrenzwert ist.

16. System gemäß Anspruch 15,
wobei die Erfassungseinrichtung entweder wenigstens eine Infrarotkamera oder eine für Infrarotstrahlung empfindliche Kamera mit einem optischen Filter aufweist.
